# EUROPÄISCHE PATENTSCHRIFT

(11) **EP 2 128 511 B1**
(45) Veröffentlichungstag und Bekanntmachung des Hinweises auf die Patenterteilung: **21.03.2012**
(21) Anmeldenummer: 09005833.0
(22) Anmeldetag: 27.04.2009
(51) Int. Cl.: F16L 39/02, F16L 33/22, E04B 1/68

(54) **Anschlussvorrichtung zur Aufnahme von zumindest einem Verpressschlauch**
Connection device for holding at least one compression hose
Dispositif de raccord destiné à la réception d'au moins un tuyau flexible de compression

(30) Priorität: 28.05.2008 DE 102008025578
(43) Veröffentlichungstag der Anmeldung: 02.12.2009
(73) Patentinhaber: StekoX GmbH, 71106 Magstadt (DE)
(72) Erfinder: Kogel, Andreas, 72108 Rottenberug a. N. (DE); Steinbuch, Claus, 71711 Steinheim (DE)
(74) Vertreter: Maser, Jochen

(56) Entgegenhaltungen:
- DE-A1- 10 209 233
- DE-A1- 19 755 603
- DE-U1- 9 213 781
- DE-U1- 29 815 472
- US-A- 5 913 635

## Beschreibung

Die Erfindung betrifft eine Anschlussvorrichtung zur Aufnahme von zumindest einem Verpressschlauch gemäß dem Oberbegriff des Anspruchs 1.

Aus der DE 102 09 233 A1 ist eine erste Ausführungsform einer Anschlussvorrichtung zur Ausnahme von einem Verpressschlauch mit einem Anschlussflansch bekannt, welche eine an dem Anschlussflansch angeordnete Klemmeinrichtung aufweist, in der ein Ende des Verpressschlau-ches unter Klemmung fixiert ist. Die Klemmeinrichtung umfasst einen Kanal, der zur Durchgangsbohrung in einer Anschlussfläche des Anschlussflansches führt, so dass ein Injektionsmaterial Ober die Durch-gangsbohrung an der Anschtussfläche einem Inneren des Verpressschlauches zuführbar ist. Dieses vorbeschriebene Anschlussstück dient zur Aufnahme von nur einem Verpressschlauch. In einer weiteren Ausführungsform ist die Anschlussvorrichtung dahingehend modifiziert, dass durch eine Klemmeinrichtung zwei Enden von Verpressschläuchen gleichzeitig aufgenommen werden können, so dass über jeweils eine an der Anschlussfläche vorgesehene Durchgangsbohrung Injektionsmaterial wahlweise einem oder beiden Verpressschläuchen zugeführt werden kann.

Im Betonbau entstehen Arbeitsfugen beim Anschließen eines weiteren Betonbauteils an einem bereits fertiggestellten Betonbauteil. Solche Arbeitsfugen entstehen beispielsweise bei einem Boden-Wand-Anschluss sowie bei einem Wand-Wand-Anschluss. In Abhängigkeit der einzelnen Anschlüsse werden Anschlussvorrichtungen eingesetzt, bei denen ein oder zwei Verpressschläuche gleichzeitig aufgenommen werden können. Beispielswiese bei einem Wand-Wand-Anschluss werden Anschlussvorrichtungen mit einer Klemmeinrichtung zur Aufnahme von einem Ende des Verpressschlauches eingesetzt. Bei Boden-Wand-Anschlüssen kann die Situation auftreten, dass eine Anschlussvorrichtung mit einer Klemmeinrichtung zur Aufnahme von zwei Enden von Verpressschläuchen eingesetzt werden kann. Ebenso kann die Situation an der Schalung auftreten, dass die beiden Enden der sich kreuzenden Verpressschläuche zur Absicherung der Arbeitsfuge durch jeweils eine separate Anschlussvorrichtung mit einer Klemmeinrichtung für nur einen weiteren Verpressschlauch aufgenommen werden muss.

Aufgrund der unterschiedlichen Einbausituationen ist es erforderlich, dass auf der Baustelle zwei verschiedene Anschlussvorrichtungen bereitzustellen sind, so dass vor Ort in Abhängigkeit der Einbausituation entweder die Anschlussvorrichtung mit einer Klemmeinrichtung für einen Verpressschlauch oder die Anschlussvorrichtung mit einer Klemmeinrichtung für zwei Verpressschläuche zum Einsatz kommen können. Dabei tritt auch der Fall ein, dass bei einem Mangel von Anschlussvorrichtungen mit einer Klemmeinrichtung für einen Verpressschlauch die kostenintensiveren Anschlussstücke mit zwei Anschlüssen für zwei Verpressschläuche eingesetzt werden. Dies weist darüber hinaus den Nachteil auf, dass beim nachträglichen Zuführen von einem Injektionsmedium nicht mehr sichtbar ist, welcher der beiden Anschlüsse mit einem Verpressschlauch verbunden ist.

Der Erfindung liegt deshalb die Aufgabe zugrunde, eine Anschlussvorrichtung zu schaffen, welche flexibel einsetzbar und auf die jeweilige Montagesituation der Arbeitsfuge anpassbar ist.

Diese Aufgabe wird erfindungsgemäß durch eine Anschlussvorrichtung zur Aufnahme von zumindest einem Verpressschlauch mit zumindest zwei Anschlussstücken gelöst, wobei jedes Anschlussstück einen Anschlussflansch und zumindest eine daran angeordnete Klemmvorrichtung umfasst, durch welche zumindest ein Ende des Verpressschlauches fixierbar ist, wobei gemäß einer ersten Ausführungsform zwischen zumindest zwei Anschlussstücken eine Sollbruchverbindung vorgesehen ist, die nach Bedarf ermöglicht, dass anwendungsbedingt eine zunächst einteilige Anschlussvorrichtung mit zwei oder mehreren Anschlussstücken in zwei oder mehrere separate Anschlussstücke getrennt werden kann. Somit kann die Anschlussvorrichtung in der bereitgestellten Form oder in einer an die Einbausituation angepasste Form eingebaut werden. Die Anschlussvorrichtung, welche zumindest zwei Anschlussstücke umfasst, kann also als Doppelanschluss oder als zwei separate Anschlüsse eingesetzt werden. Sollte die Anschlussvorrichtung mehrere Anschlussstücke umfassen, kann eines oder mehrere Anschlussstücke von einem verbleibenden Rest von Anschlussstücken getrennt werden. Insbesondere bei einer Anschlussvorrichtung mit zwei Anschlussstücken kann die eingangs als nachteilig im Stand der Technik beschriebene Einzelbausituation zur Bereitstellung von verschiedenen Ausführungsformen der Anschlussvorrichtungen in einfacher Weise gelöst werden. Da die Trennung der Anschlussstücke über die Sollbruchverbindung vorzugsweise ohne zusätzliches Werkzeug unmittelbar am Einbauort vorgenommen werden kann, ist ein flexibler Einsatz einer solchen Anschlussvorrichtung möglich. Sofern nur eines der beiden Anschlussstücke benötigt wird, kann das andere abgetrennte Anschlussstück zu einem späteren Zeitpunkt an einer anderen Stelle zum Einsatz kommen.

Die zweite alternative Ausführungsform der erfindungsgemäßen Anschlussvorrichtung, bei der anstelle einer Sollbruchverbindung zwischen zwei benachbarten Anschlussstücken eine lösbare Rastverbindung vorgesehen ist, weist die selben Vorteile wie die Ausführungsform mit der Sollbruchbindung auf. Darüber hinaus weist die Ausführungsform mit der lösbaren Rastverbindung den Vorteil auf, dass zwei Anschlussstücke, die bei einem vorherigen Einbau von einer Anschlussvorrichtung abgetrennt und für den dortigen Einsatzfall nicht benötigt wurden, wieder in einfacher Weise zu einer Anschlussvorrichtung zusammengesetzt werden können. Somit weist diese alternative Ausführungsform die Möglichkeit auf, dass die Anschlussvorrichtungen in einfacher Weise in einzelne Anschlussstücke getrennt und bedarfsmäßig zwei oder mehrere getrennte Anschlussstücke wieder in eine Anschlussvorrichtung übergeführt werden können.

Durch diese erfindungsgemäßen Anschlussvorrichtungen ist somit eine flexible Anordnung geschaffen, welche lediglich das Bevorraten von einer Art von Anschlussvorrichtung erfordert und sowohl das Einbringen eines Verpressschlauches für eine horizontale als auch vertikale Arbeitsfuge ermöglicht.

Nach einer bevorzugten Ausgestaltung der Erfindung ist vorgesehen, dass zwischen zwei Anschlussstücken eine Trennebene gebildet ist und dass zumindest eine Sollbruchverbindung oder zumindest eine lösbare Rastverbindung in der Trennebene liegt. Dadurch kann eine konstruktiv einfache Anordnung geschaffen werden, um zwei oder mehrere Anschlussstücke zur Bildung einer Anschlussvorrichtung aneinander zu reihen. Des Weiteren kann nach einer bevorzugten Ausführungsform vorgesehen sein, dass zumindest eine Sollbruchverbindung und zumindest eine lösbare Rastverbindung in der Trennebene zwischen den Anschlussstücken liegt. Dadurch ist eine Anordnung geschaffen, welche bei einer Handhabung der Anschlussvorrichtungen, wie beispielsweise beim Verpacken oder beim Herausnehmen aus einer Verpackung als eine Einheit verbleiben, jedoch beim bewussten Vereinzeln durch eine einfache Betätigung in zwei Anschlussstücke trennbar ist. Die lösbare Rastverbindung dient bevorzugt als Sicherung der Sollbruchverbindung, so dass ein unbeabsichtigtes Lösen verhindert wird.

Die Sollbruchverbindung zur Positionierung von wenigstens zwei Anschlussstücken zu einer Anschlussvorrichtung ist bevorzugt als Knickstelle ausgebildet, welche nach einem oder mehrmaligen Knicken bricht. Durch ein aktives Bewegen der beiden benachbarten Anschlussstücke kann ein gezieltes Trennen eines oder mehrerer Anschlußstücke von dem oder den restlichen Anschlussstücken ermöglicht sein.

Des Weiteren ist bevorzugt vorgesehen, dass die Sollbruchverbindung als Filmscharnier ausgebildet ist. Solche Filmscharniere können unmittelbar bei der Herstellung der Anschlussvorrichtung, welche bevorzugt aus Kunststoff, insbesondere als Spritzgussteil, ausgebildet sind, eingebracht werden und stellen eine kostengünstige Sollbruchverbindung dar, welche in einem Arbeitsgang zusammen mit der Ausformung und Bildung der Anschlussstücke beziehungsweise der Anschlussvorrichtung ermöglicht ist.

Nach einer alternativen Ausgestaltung der Sollbruchverbindung weist diese zumindest einen Steg auf oder ist als Stegbereich ausgebildet, wobei entlang der Trennebene eine Perforation im Stegbereich vorgesehen ist. Diese Anordnung ermöglicht ein einfaches Abtrennen von zwei benachbarten Anschlussstücken, wobei dieser Trennvorgang nicht nur durch eine Knickung, sondern auch durch eine gegenseitige Schwenkbewegung ermöglicht wird. Alternativ können auch mehrere im Abstand zueinander angeordnete Stegabschnitte vorgesehen sein, deren Länge als auch Abstand zueinander anpassbar ist.

Eine weitere alternative Ausgestaltung der Sollbruchverbindung sieht vor, dass diese als Abreißlasche ausgebildet ist. Eine solche Abreißlasche kann zwischen zwei benachbarten Anschlussstücken der Anschlussvorrichtung vorgesehen sein, wodurch ein vollständiges Trennen nach dem Abziehen einer solchen Abrisslasche ermöglicht ist.

Die lösbare Rastverbindung ist bevorzugt durch zwei komplementär ausgebildete Rastelemente ausgebildet, die zumindest abschnittsweise ineinander greifen. Dadurch kann durch eine Steck- oder Schiebeverbindung ein Zusammenführen von zwei oder mehreren Anschlussstücken ermöglicht sein. Ebenso kann ein einfaches bedarfsweises Lösen von einer Anschlussvorrichtung zu zumindest einem Anschlussstück der Anschlussvorrichtung ermöglicht werden.

Die lösbare Rastverbindung weist bevorzugt Rastelemente auf, die durch eine Klemmverbindung ausgebildet sind. Diese Klemmverbindung dient zur Aufrechterhaltung der Verbindung zwischen den beiden Anschlussstücken bei der normalen und üblichen Handhabung. Sofern eine geringe Kraft aufgebracht wird, kann ein einfaches Lösen erfolgen.

Bevorzugt sind die Rastelemente zur Bildung einer Steck- und/oder Klemmverbindung als Nut- oder Federelement ausgebildet. Diese können in einfacher Weise klemmend ineinander greifen. Das Zusammenstecken und Lösen der Rastelemente ist einfach und selbst bei geringfügiger Verschmutzung möglich. Des Weiteren können die Rastelemente als Durchgangsbohrung und Zapfen ausgebildet sein, so dass der Zapfen zur lösbaren Verbindung in die Durchgangsbohrung eingreift. Alternativ zur Durchgangsbohrung kann auch eine napfförmige Vertiefung vorgesehen sein, in welche der Zapfen durch eine Steck- und/oder Klemmverbindung aufgenommen ist.

Nach einer weiteren bevorzugte Ausgestaltung der Erfindung ist vorgesehen, dass an einer Stirnfläche des Anschlussflansches des Anschlussstückes, welches an einer Stirnfläche des Anschlussflansches des benachbarten zu verbindenden Anschlussstückes angreift, das vorzugsweise als Nut- und Federelement ausgebildete Rastelement sich über die gesamte Stirnfläche am Anschlussflansch erstreckt. Dadurch kann eine große Klemmfläche erzielt werden. Gleichzeitig ermöglicht diese Anordnung, dass an einer Stirnfläche des Anschlussflansches beispielsweise ein Nutelement als Rastelement ausgebildet und an der gegenüberliegenden Stirnfläche ein Federelement als Rastelement vorgesehen ist. Somit können mehrere Anschlussstücke in einer Reihe zueinander zu einer Anschlussvorrichtung lösbar verbunden werden.

Alternativ können an einer Stirnfläche des Anschlussflansches beispielsweise eine oder mehrere Durchgangsbohrungen oder Vertiefungen vorgesehen sein, in welche an einer Stirnfläche des weiteren Anschlusses vorgesehene Zapfen eingreifen, um die beiden Anschlussstücke miteinander zu verbinden.

Alternativ zu der vorbeschriebenen Ausführungsform kann vorgesehen sein, dass an einer Stirnfläche des Anschlussflansches sowohl ein Nutals auch ein Federelement als Rastelement angeordnet ist. An der gegenüberliegenden Stirnfläche des selben Anschlussflansches ist ebenfalls ein Nut- und Federelement vorgesehen, wobei die Anordnung der Nut-und Federelemente punktsymmetrisch zum Flächenmittelpunkt der Anlagefläche des Anschlussflansches vorgesehen sind. Somit kann unabhängig der Ausrichtung des Anschlussstückes ein Verbinden mit einem weiteren Anschlussstück erfolgen, um das Zusammenstecken von zwei getrennten Anschlussstücken zu erleichtern.

Nach einer weiteren bevorzugten Ausgestaltung der lösbaren Rastverbindung ist vorgesehen, dass zumindest eines der beiden Rastelemente, welche die lösbare Rastverbindung bilden, eine Hinterschneidung aufweist. Somit kann beispielsweise an einem Anschlussstück eine oder mehrere Öffnungen vorgesehen sein, in welcher Hakenelemente oder dergleichen des anderen Anschlussstückes eingreifen und die beiden Anschlussstücke zueinander positionieren. Des Weiteren kann vorgesehen sein, dass beide Rastelemente eine Hinterschneidung aufweisen, so dass beispielsweise eine Art Federverbindung oder eine schwalbenschwanzförmige Verbindung geschaffen ist. In Abhängigkeit der Größe der Hinterschneidung können die Rastelemente nur entlang deren Längserstreckung ineinander geschoben werden. Bei einer geringen Ausbildung der Hinterschneidung können die Rastelemente auch in einer Aufsteckrichtung rechtwinklig zu deren Längserstreckung aufeinander zubewegt und verrastet werden.

Eine bevorzugte Ausführungsform der Anschlussvorrichtung sieht vor, dass zwei zueinander benachbarte Anschlussflansche mit einer Sollbruchverbindung, insbesondere einem Filmscharnier, verbunden sind, welche in der Anschlussfläche der Anschlussstücke liegen. Dadurch ist eine durch die Sollbruchverbindung nicht beeinflusste Anlagefläche gegeben. Die Positionierung und Anlage einer solchen Anlagefläche der Anschlussvorrichtung an einer Schalung ist dadurch nicht beeinträchtigt. Darüber hinaus kann eine vollflächige Anlage der Anschlussvorrichtung an der Schalung aufrechterhalten bleiben.

Nach einer weiteren bevorzugten Ausführungsform der Erfindung ist vorgesehen, dass die zwischen zwei benachbarten Anschlussflanschen vorgesehene Rastverbindung die Anschlussflächen bündig zueinander anordnet. Dadurch kann wiederum eine gemeinsame geschlossene Anlagefläche der einzelnen Anlageflächen der jeweiligen Anschtussflansche gegeben sein.

Nach einer weiteren bevorzugten Ausführungsform der Anschlussvorrichtung ist zwischen zwei benachbarten Klemmeinrichtung eine lösbare Rastverbindung vorgesehen, die bevorzugt mit Abstand zur Sollbruchverbindung angeordnet sind, die zwei benachbarte Anschlussflansche verbindet. Diese Anordnung weist den Vorteil auf, dass die Positionierung und Anordnung der Anschlussstücke zueinander gesichert werden kann, so dass keine unbeabsichtigte Vereinzelung erfolgt. Dadurch wird die Robustheit im Einsatz auf der Baustelle erhöht.

Eine alternative Ausführungsform sieht vor, dass anstelle der lösbaren Rastverbindung zwischen zwei benachbarten Klemmeinrichtungen eine weitere Sollbruchverbindung vorgesehen ist, so dass die beiden Anschtussstücke beispielsweise durch zwei im Abstand zueinander angeordnete Sollbruchverbindungen miteinander verbunden sind. Die eine Sollbruchverbindung liegt in der Ebene der zwei Anschlussflansche. Die weitere Sollbruchverbindung liegt im Bereich der benachbart zueinander ausgerichteten Klemmeinrichtungen und positioniert diese beiden zueinander. Des Weiteren kann alternativ vorgesehen sein, dass eine beliebige Kombination von lösbaren Rastverbindungen und Sollbruchverbindungen vorgesehen sind, welche zumindest zwei Anschlussstücke miteinander verbinden. Auch können nur zwei lösbare Rastverbindungen vorgesehen sein, um die zumindest zwei Anschlussstücke miteinander zu verbinden.

Die Anschlussvorrichtung weist nach einer weiteren vorteilhaften Ausgestaltung der Erfindung an jeder Klemmeinrichtung zumindest eine Sperre für ein Injektionsmedium auf, welche als Ringabschnitt eine Klemmhülse der Klemmeinrichtung umgibt. An diesem Ringabschnitt ist bevorzugt jeweils ein Rastelement der lösbaren Rastverbindung vorgesehen. Die als Ringabschnitt ausgebildete Sperre, die in der Fläche gröβer als eine Querschnittsfläche des Verpressschtauches ausgebildet ist, erstreckt sich bis zur benachbarten Sperre an der benachbarten Klemmeinrichtung, so dass die Ringabschnitte aneinander liegen. In diesem aneinandergrenzenden Bereich, insbesondere in der Trennebene, ist die lösbare Rastverbindung positioniert. Alternativ können auch außerhalb der Trennebene ineinander greifende Rastelement der lösbaren Rastverbindung an dem Ringabschnitt vorgesehen sein. Diese Ringabschnitte, welche die Klemmeinrichtungen umgeben, können beispielsweise eine quadratische oder rechteckförmige Außenkontur aufweisen. Alternativ können auch kreisrunde Außenkonturen vorgesehen sein, wobei in den aneinandergrenzenden Bereichen zwischen zwei benachbarten Klemmeinrichtungen bevorzugt ein flächenförmiger Bereich vorgesehen ist, der zur Trennebene ausgerichtet ist, um einfache geometrische Verhältnisse zu schaffen. Dadurch kann auch ein einfaches Lösen der Sollbruchverbindung oder lösbaren Rastverbindung zwischen den beiden Anschlussstellen der einander zugeordneten Ringabschnitte ermöglicht sein.

Nach einer alternativen Ausgestaltung der Anschlussvorrichtung ist vorgesehen, dass zumindest zwei benachbarte Klemmeinrichtungen durch ein Verbindungsstück zueinander festgelegt sind, welches auf die zumindest zwei benachbarten Klemmeinrichtungen aufsteckbar ist. Bei dieser alternativen Ausführungsform wird die lösbare Rastverbindung einerseits durch das Verbindungsstück und andererseits durch die jeweilige Klemmeinrichtung gebildet, an welcher das Verbindungsstück angreift. Das Verbindungsstück ist nach dem Aufsetzen auf die zumindest zwei benachbarten Klemmeinrichtungen ebenfalls bevorzugt als Sperre für ein Injektionsmedium ausgebildet.

Nach einer weiteren bevorzugten Ausführungsform ist vorgesehen, dass das Verbindungsstück, welches zumindest zwei benachbarte Klemmeinrichtungen der Anschlussstücke zueinander positioniert, entlang der Längsachse eine die Aufnahmeöffnung durchlaufende Trennebene aufweist, wobei die dadurch gebildeten Verbindungselemente des Verbindungsstücks, vorzugsweise gelenkig miteinander verbunden sind. Dadurch kann anstelle einem Aufschieben des Verbindungsstücks auf die Klemmeinrichtungen auch ein Anlegen und Schließen durch die gelenkig miteinander verbundenen Verbindungselemente des Verbindungsstücks gegeben sein.

Nach einer weiteren bevorzugten Ausgestaltung der Anschlussvorrichtung ist vorgesehen, dass die Klemmeinrichtung eine an dem Anschlussflansch angeordnete Klemmhülse aufweist, welche eine Tülle umgibt, wobei die Klemmhülse länger als die Tülle ausgebildet ist. Diese Anordnung weist den Vorteil auf, dass das in der Klemmeinrichtung aufgesteckte Ende des Verpressschlauches durch die Klemmhülse über den reinen Klemmbereich zwischen der Tülle und der Klemmhülse hinaus geführt und geschützt ist, so dass beim Einfüllen des Betons von oben ein Abknicken des Verpressschlauches unmittelbar von der Tülle verhindert ist.

Nach einer weiteren bevorzugten Ausgestaltung der Erfindung ist vorgesehen, dass die Tülle einen Durchgangskanal aufweist, welcher die Durchgangsbohrung an der Anschlussstelle mit einem Inneren eines auf der Klemmeinrichtung aufgesteckten Verpressschlauches verbindet. Dadurch kann beim Verpressen eines Injektionsmediums ein unmittelbares Durchführen in den Innenraum des Verpressschlauches gegeben sein.

Des Weiteren sind bevorzugt am Außenumfang der Tülle, am Innenumfang der Klemmhülse oder am Außenumfang der Tülle und am Innenumfang der Klemmhülse von der Klemmeinrichtung hervorstehende Rippen vorgesehen. Dadurch kann erzielt werden, dass durch eine einfache Aufsteckbewegung eine Befestigung des Verpressschlauches an der Anschlussvorrichtung vorgesehen ist.

Des Weiteren ist bevorzugt vorgesehen, dass die Rippe in Aufsteckrichtung konisch ansteigend ausgebildet ist. Dadurch kann mit zunehmender Aufsteckbewegung eine Erhöhung der Klemmwirkung zur Bildung der Steckverbindung ermöglicht werden.

Die Rippen am Innenumfang der Klemmhülse der Klemmeinrichtung und die Rippen am Außenumfang der Tülle sind versetzt zueinander angeordnet. Bevorzugt sind diese abwechselnd an der Klemmhülse und der Tülle auf Lücke angeordnet, um einerseits einen Toleranzausgleich für das Ende des Verpressschlauches zu ermöglichen und andererseits die Steckverbindung sicherzustellen.

Nach einer weiteren bevorzugten Ausgestaltung der Erfindung ist vorgesehen, dass zwei zueinander benachbarte Anschlussflansche eines Anschlussstückes eine gemeinsame Anlagefläche bilden, die ein Positionierelement zur Aufnahme eines Distanzstückes aufweist. Dieses Positlonierelement kann als Erhöhung oder Vertiefung ausgebildet sein, um eine vorbestimmte Lage zu den Durchgangsbohrungen an der Anlagefläche einzunehmen. Sofern beispielsweise drei Anschlussstücke eine Anschlussvorrichtung bilden, können zwei Positionierelemente vorgesehen sein, die jeweils zwei Durchgangsbohrungen umgeben, wobei eine gemeinsame Schnittmenge gebildet wird, in der die mittlere Durchgangsbohrung liegt. Eine analoge Anordnung kann für mehrere aneinander gereihte Anschlussstücke zur Bildung einer Anschlussvorrichtung vorgesehen sein. Alternativ können auch nur zwei Durchgangsbohrungen durch ein Positionierelement umgeben werden, so dass eine Schnittmenge nicht auftritt.

Nach einer weiteren bevorzugten Ausgestaltung der Anschlussvorrichtung ist an jedem Anschlussflansch zumindest eine Nagellasche mit vorzugsweise einer U-förmigen randoffenen Ausnehmung vorgesehen, wobei die Nagellasche bevorzugt mit zumindest einer Sollbruchverbindung, einer lösbaren Rastverbindung oder einer gelenkigen Verbindung zum Anschlussflansch angeordnet ist. Dadurch kann ein leichtes Entfernen der Schalung beziehungsweise der Schalhaut von der Anschlussvorrichtung ermöglicht werden, ohne dass ein Ausreißen des Anschlussstückes aus der betonierten Wand erfolgt.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht einer Boden-Wand- Arbeitsfuge mit darin verlegten Verpressschläuchen gemäß dem Stand der Technik,
- Figur 2: eine weitere perspektivische Ansicht einer Boden- Wand-Arbeitsfuge mit einem alternativen Anschluss- stück gemäß dem Stand der Technik,
- Figur 3: eine schematische Seitenansicht einer ersten erfin- dungsgemäßen Ausführungsform einer Anschluss- vorrichtung,
- Figur 4: eine schematische Ansicht von oben auf die erfin- dungsgemäße Arschlussvorrichtung gemäß Figur 3,
- Figur 5: eine schematische Vorderansicht der erfindungsge- mäßen Anschlussvorrichtung gemäß Figur 3,
- Figur 6: eine schematische Rückansicht der erfindungsgemä- β en Anschlussvorrichtung gemäß Figur 3,
- Figur 7: eine perspektivische Darstellung der Anschlussvor- richtung gemäß Figur 3 nach dem Vereinzeln von Anschlussstücken der Anschlussvorrichtung,
- Figur 8: eine perspektivische Ansicht einer alternativen Aus- führungsform der Anschlussvorrichtung zur Figur 3,
- Figur 9: eine perspektivische Ansicht einer weiteren alterna- tiven Ausführungsform der Anschlussvorrichtung gemäß Figur 8,
- Figur 10: eine perspektivische Ansicht der Anschlussvorrich- tung gemäß Figur 9 nach dem Vereinzeln der An- schlussstücke,
- Figur 11: eine perspektivische Darstellung einer weiteren al- ternativen Ausführungsform der Anschlussvorrich- tung zu Figur 3,
- Figur 12: eine perspektivische Darstellung der Anschlussvor- richtung gemäß Figur 11 nach dem Vereinzeln von Anschlussstücken der Anschlussvorrichtung,
- Figur 13: eine schematische Schnittdarstellung eines An- schlussstückes der Anschlussvorrichtung gemäß Fi- gur 11,
- Figur 14: eine schematische Ansicht auf eine Ablagefläche ei- ner alternativen Ausgestaltung einer lösbaren Rast- verbindung für eine Anschlussvorrichtung,
- Figur 15: eine perspektivische Ansicht der Anschlussvorrich- tung gemäß Figur 11 mit einem Distanzstück,
- Figur 16: eine perspektivische Darstellung einer weiteren al- ternativen Ausführungsform der Anschlussvorrich- tung zu Figur 3,
- Figur 17: eine schematische Ansicht von oben auf die alterna- tive Ausführungsform der Anschlussvorrichtung ge- mäß Figur 16,
- Figur 18: eine schematische Vorderansicht der weiteren alter- nativen Ausführungsform der Anschlussvorrichtung gemäß Figur 16 und
- Figur 19: eine perspektivische Rückansicht einer weiteren al- ternativen Ausführungsform der Anschlussvorrich- tung gemäß Figur 16.

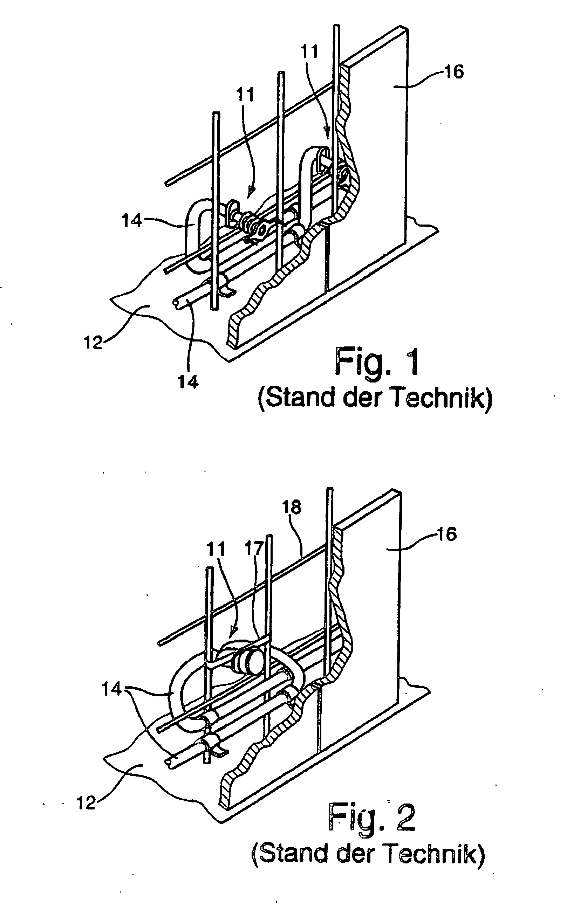

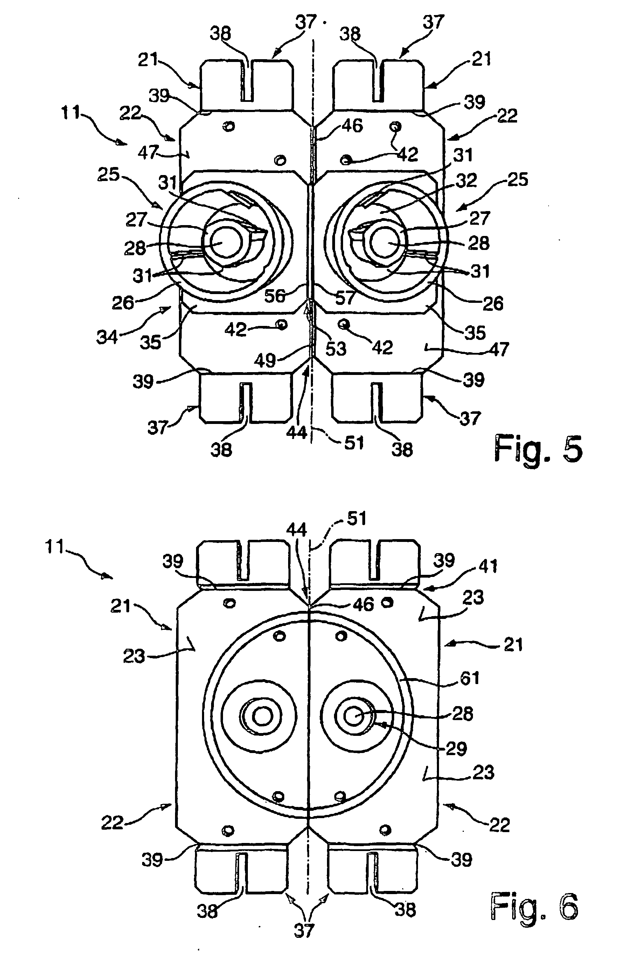

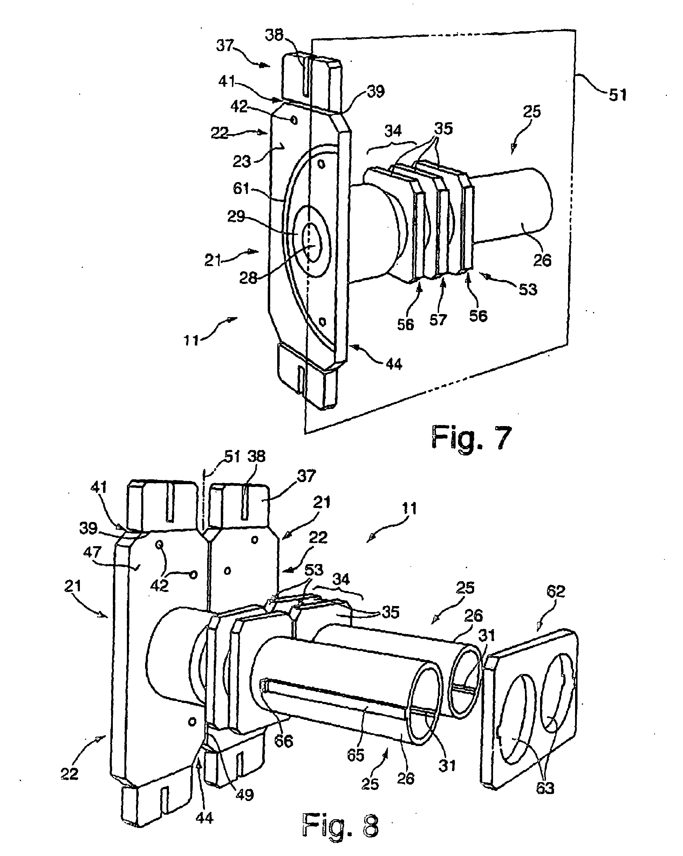

In den Figuren 1 und 2 sind Anschlussvorrichtungen 11 dargestellt, welche bereits bekannt und mehrfach eingesetzt werden. Auf einer Bodenplatte 12, auf einem Fundament oder einer Decke ist ein weiteres Betonbauteil, wie beispielsweise eine Wand, zu errichten. Zum späteren Abdichten einer Arbeitsfuge, die zwischen der Bodenplatte 12 der zu errichtenden Wand entsteht, sind Verpressschläuche 14 vorgesehen, welche entlang der Arbeitsfuge verlegt sind. Damit eine sichere Abdichtung im Endbereich des jeweiligen Verpressschlauches 14 sichergestellt ist, werden die Verpressschläuche 14 einen Übertappungsbereich bildend verlegt, bevor das Ende eines Verpressschlauches 14 mit der Anschlussvorrichtung 11 verbunden wird, welche beispielsweise gemäß Figur 1 an eine Schalung 16 genagelt wird. Alternativ kann die Anschlussvorrichtung 11 auch Ober Blechlaschen 17 an einer Bewehrung 18 vorgesehen sein. Bei dem in Figur 1 dargestellten Ausführungsbeispiel werden die beiden Anschlussvorrichtungen 11 getrennt zueinander angeordnet. Solche Anschlussvorrichtungen 11 sind beispielsweise aus der Figur 1 der DE 102 09 233 A1 bekannt. Die in Figur 2 dargestellte Ausführungsform der Anschlussvorrichtung 11 geht beispielsweise aus den Figuren 6 oder 7 der DE 102 09 233 A1 hervor.

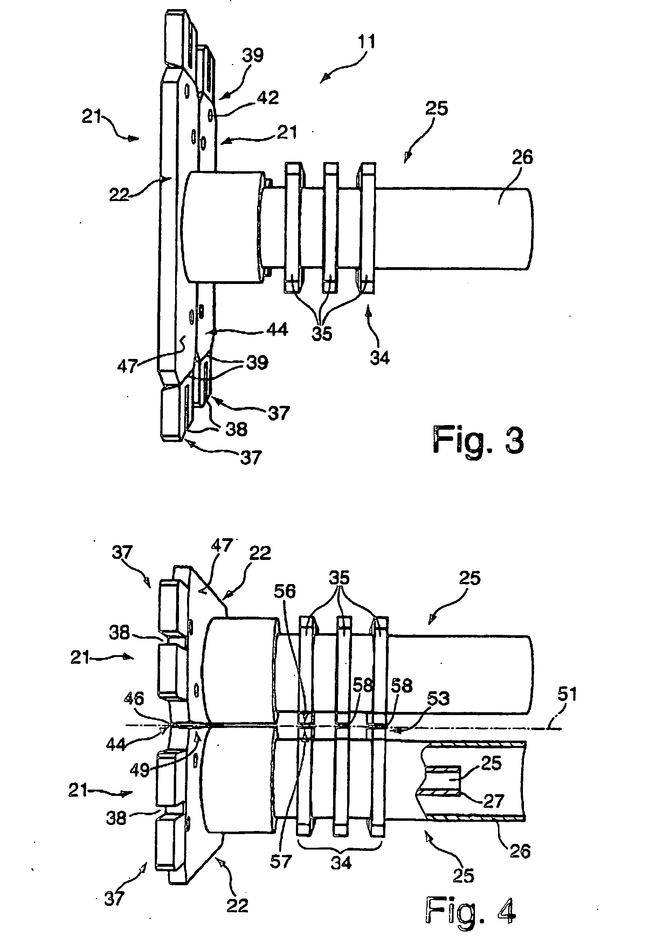

Durch die erfindungsgemäße Ausgestaltung der Anschlussvorrichtung 11 gemäß den Figuren 3 bis 7 und deren weiteren alternativen Ausführungsformen gemäß den Figuren 8 bis 15 ist unabhängig der Montagesituation vor Ort die Schaffung einer Anschlussvorrichtung 11 möglich, um sowohl eine Anordnung und Aufnahme der Verpressschläuche 14 gemäß Figur 1 als auch gemäß Figur 2 vorzusehen.

Die erfindungsgemäße Anschlussvorrichtung 11 umfasst beispielsweise zwei Anschlussstücke 21, welche prinzipiell denselben Aufbau aufweisen. Alternativ können auch mehrere Anschlussstücke 21 vorgesehen sein, die eine Anschlussvorrichtung 11 bilden. Ein sogenannter modularer Aufbau ist möglich. Jedes Anschlussstück 21 umfasst einen Anschlussflansch 22 mit einer Anlagefläche 23, durch welche die Anschlussvorrichtung 11 zur Anlage an einer Schalung gebracht wird. An dem Anschlussflansch 22 ist eine Klemmeinrichtung 25 vorgesehen, welche den Verpressschlauch 14 aufnimmt. Diese Klemmeinrichtung 25, welche beispielsweise in Figur 5 näher dargestellt ist, umfasst eine Klemmhülse 26, die eine Tülle 27 umgibt. Diese Tülle27 weist einen Durchgangskanal 28 auf, der in eine Durchgangsbohrung 29 (Figur 6) mündet, die in der Anlagefläche 23 liegt. Am Außenumfang der Tülle 27 und am Innenumfang der Klemmhülse 26 sind jeweils Rippen 31 vorgesehen, die zum Anschlussflansch 22 konisch ansteigend ausgebildet sind. Diese Rippen sind bevorzugt versetzt zueinander auf Lücke und abwechselnd an der Tülle 27 und an der Klemmhülse 26 angeordnet. Das Ende des Verpressschlauches 14 wird in die Klemmeinrichtung 25 eingeführt und aufgrund der Klemmung zwischen den Rippen 31 fixiert. In einer aufgesteckten Position kann eine Stirnseite des Verpressschlauches 14 an dem eignen Boden 32 der Klemmeinrichtung 25 anliegen, der Teil einer Flanschfläche 47 des Anschlussflansches 22 ist. Die Tülle 27 ist gegenüber der Klemmhülse 26 verkürzt beziehungsweise nach innen zurückspringend ausgebildet, so dass beim Einfüllen von Beton ein Abknicken des Verpressschlauches 14 unmittelbar am Ende der Tülle 27 verhindert und ein freies Einfließen des Injektionsmediums in den Verpressschlauch 14 ermöglicht ist.

Am Außenumfang der Klemmeinrichtung 25 ist eine Sperre 34 in Form eines Ringabschnittes 35 ausgebildet, der die Klemmhülse 26 umgibt. Dadurch soll verhindert werden, dass gegebenenfalls zwischen dem Verpressschlauch 14 und der Klemmhülse 26 austretendes Injektionsmedium in Richtung auf die Anlagefläche 23 der Anschlussvorrichtung 11 flie- βen und somit aus der betonierten Wand heraus treten kann. Zur Erhöhung der Sicherheit sind beispielsweise drei Ringabschnitte 35 zur Bildung der Sperre 34 vorgesehen.

Der Anschlussflansch 22 weist an seiner oberen und unteren Stirnseite eine Nagellasche 37 auf. Diese Nagellasche 37 umfasst eine randoffene U-förmige Ausnehmung 38, welche zur Anordnung von Nägeln oder ähnlichen Befestigungsvorrichtungen an der Schalung 16 dienen. Die Nagellasche 37 ist über eine Gelenkverbindung 39, insbesondere ein Filmscharnier, an dem Anschlussflansch 22 befestigt. Alternativ kann eine Sollbruchverbindung oder lösbare Rastverbindung, wie nachfolgend noch beschrieben ist, vorgesehen sein. Diese Gelenkverbindung 39 liegt der Anlagefläche 23 gegenüberliegend am Anschlussflansch 23. Dazwischenliegend ist ein keilförmiger Freiraum 41 ausgebildet, wodurch ermöglicht wird, dass beim Abnehmen der Schalung von der Betonwand die Nagellaschen 37 sich nach außen neigen können, so dass die Nägel beziehungsweise Befestigungselemente, die sich von der Schalung 16 beim Abnehmen der Schalung nicht lösen, aus der U-förmigen Ausnehmung 38 freikommen.

In dem Anschlussflansch 22 können des Weiteren einzelne Bohrungen 42 vorgesehen sein. Solche Bohrungen 42 dienen zur Aufnahme von Befestigungselementen, wie Nägeln oder dergleichen, um zusätzlich den Anschlussflansch 22 an der Schalung 16 zu fixieren. Des Weiteren können solche Bohrungen 42 dazu dienen, um über Drähte die Elnschlussvorrichtung 11 an der Bewehrung 18 zu fixieren.

Die vorbeschriebenen Anschlußstücke 21 sind durch eine lösbare Sollbruchverbindung 44 miteinander zu einer Anschlussvorrichtung 11 verbunden und beispielsweise in den Figuren 1 bis 10 dargestellt. Bevorzugt ist eine solche Sollbruchverbindung 44 zwischen den Anschlussflanschen 22 der Anschlussstücke 21, insbesondere den seitlichen Stirnflächen der Anschlussflansche 22, vorgesehen. Im Ausführungsbeispiel gemäß den Figuren 3 bis 7 ist die Sollbruchverbindung als Filmscharnier 46 ausgebildet. Dieses Filmscharnier 46 liegt bündig zur Anlagefläche 23, so dass die Anlagefläche 23 im Bereich der Sollbruchverbindung 44 bevorzugt eben und geschlossen ausgebildet ist. Zwischen der Anlagefläche 23 und der Flanschfläche 47 ist ein keilförmiger Freiraum 49 ausgebildet.

Zwischen zwei benachbarten Anschlussstücken 21 und entlang der Sollbruchverbindung 44 erstreckt sich eine Trennebene 51. Zum Vereinzeln der Anschlussstücke 21 der Anschlussvorrichtung 11 ist dabei lediglich erforderlich, dass die beiden Klemmeinrichtungen 25 beispielswelse voneinander wegbewegt werden, wobei die Sollbruchverbindung 44 durch eine Knickbewegung bricht. Folglich liegen zwei separate Anschlussstücke 21 vor, wie eines davon beispielsweise in Figur 7 dargestellt ist.

In der Trennebene 51 ist des Weiteren bevorzugt eine lösbare Rastverbindung 53 vorgesehen, welche zwischen den benachbarten Klemmeinrichtungen 25 der Anschlussvorrichtung wirkt. Diese lösbaren Rastverbindungen 23 liegen bevorzugt in der Trennebene 51, in der auch die Sollbruchverbindung 44 liegt Die in den Figuren 4, 5 und 7 dargestellte lösbare Rastverbindung 53 umfasst zwei Rastelemente 56, 57, die lösbar miteinander verbunden sind. Bevorzugt erstrecken sich die Rastelemente 56, 57 entlang einer Stirnseite 58 der Sperre 34, so dass diese sich unmittelbar einander gegenüberliegen und bevorzugt eine parallele Anordnung der Klemmeinrichtung 25 zueinander bewirken. Dadurch ist gleichzeitig eine ebene Anlagefläche 23 durch die beiden Anschlussflansche 22 ausgebildet. Die lösbaren Rastelemente 56, 57 können in deren konkreten Ausführungsform vielfältig ausgebildet sein. Beispielsweise können kreisförmige oder stegförmige Rastelemente 56, 57 vorgesehen sein, die in komplementär ausgebildete Vertiefungen oder Aufnahmen als zweite Rastelemente 37, 56 eingeklipst und eingerastet werden können. Solche lösbaren Rastverbindungen 53 welsen den Vorteil auf, dass ein vorzeitiges Brechen der Sollbruchverbindung 44 verhindert wird. Durch ein einfaches voneinander Wegbewegen der Klemmeinrichtungen 25 kann die lösbare Rastverbindung 53 gelöst werden. Bei einem weiteren Verdrehen der beiden Anschlussstücke 21 um eine Drehachse, welche bevorzugt entlang der Sollbruchverbindung 44 beziehungsweise dem Filmscharnier 46 verläuft, kann ein Brechen der Sollbruchverbindung 44 erzielt werden.

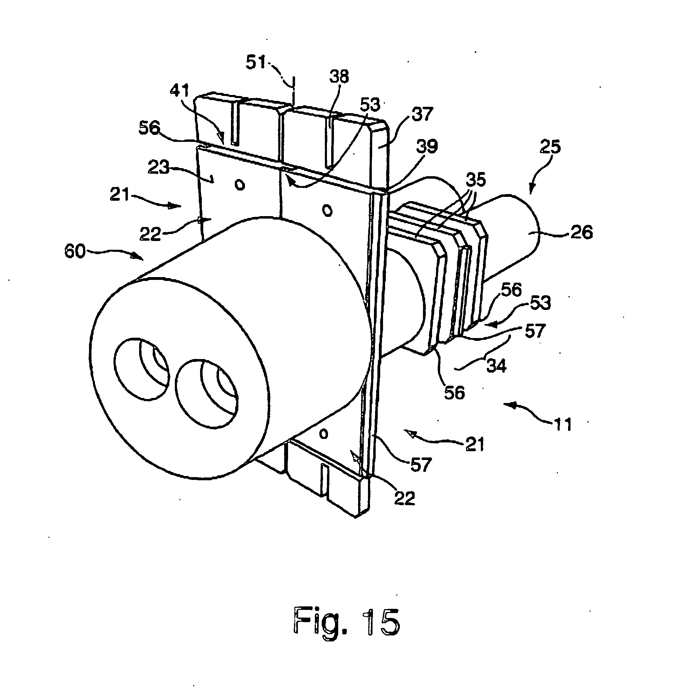

Die gemeinsame Anlagefläche 23 der zwei benachbarten Anschlussstücke 21, wie beispielsweise in Figur 6 dargestellt ist, kann des Weiteren ein Positionierelement 61 umfassen, welches beispielsweise in Form einer Erhöhung oder Vertiefung vorgesehen ist, um ein Distanzstück 60 (Figur 15) aufzunehmen, so dass bei einer Befestigung der Anschlussvorrichtung 11 an einer Bewehrung 18 ein Abstand bis zur Schalung 16 überbrückt werden kann.

Die Durchgangsbohrungen 29 in der Anlagefläche 23 können Verschlusskappen mit unterschiedlichen Farbkodierungen aufweisen, so dass fOr den Fall einer nachträglichen Verpressung von Injektionsmedium für den Benutzer offensichtlich wird, an welcher Durchgangsbohrung welcher Verpressschlauch angeordnet ist. Diese Anbringung der Farbkodierung ist besonders von Vorteil, wenn beispielsweise Anschlussvorrichtungen 11 zum Einsatz kommen, die mehr als zwei Anschlussstücke 21 oder mehr als zwei Durchgangsbohrungen 29 aufweisen. Ein solcher Einsatzfall ist beispielsweise dann gegeben, wenn eine Wand-Boden-Arbeitsfuge und eine Wand-Wand-Arbeitsfuge zusammentreffen.

In Figur 8 ist eine alternative Ausführungsform der Anschlussvorrichtung 11 dargestellt. Bei dieser alternativen Ausführungsform ist anstelle einer lösbaren Rastverbindung 53 zwischen den Klemmeinrichtungen 25 beziehungsweise den Sperren 34 ein Verbindungsstück 62 vorgesehen, welches zwei Bohrungen 63 aufweist, so dass das Verbindungsstück 62 auf zwei benachbarte Klemmeinrichtungen 25 aufsteckbar ist. Am Auβenumfang der Klemmeinrichtung 25 sind bevorzugt ein Führungssteg 65 und ein Endanschlag 66 vorgesehen, um sicherzustellen, dass das aufgesteckte Verbindungsstück 62 in einer vorbestimmten definierten Lage an der Anschlussvorrichtung 11, insbesondere den Klemmeinrichtungen 25, positioniert ist. Sofern mehr als zwei Anschlussstücke 21 eine Anschlussvorrichtung 11 bilden, kann das Verbindungsstück 62 Bohrungen 63 entsprechend der Anzahl der Klemmeinrichtungen 25 aufweisen oder es werden mehrere Verbindungsstücke 62 derart einander zugeordnet, dass die äußerste Bohrung des Verbindungsstückes 62 überlappend mit der äußersten Bohrung des weiteren Verbindungsstücks 62 angeordnet ist. Diese lösbare Rastverbindung 53 gemäß Figur 8 ermöglicht ebenso wie die lösbare Rastverbindung 53 gemäß den Figuren 4, 5 und 7, dass nach einer Vereinzelung der Anschlussstücke 21 wieder eine einzige Anschlussvorrichtung 11 mit zwei oder mehreren Anschlussstücken 21 geschaffen werden kann.

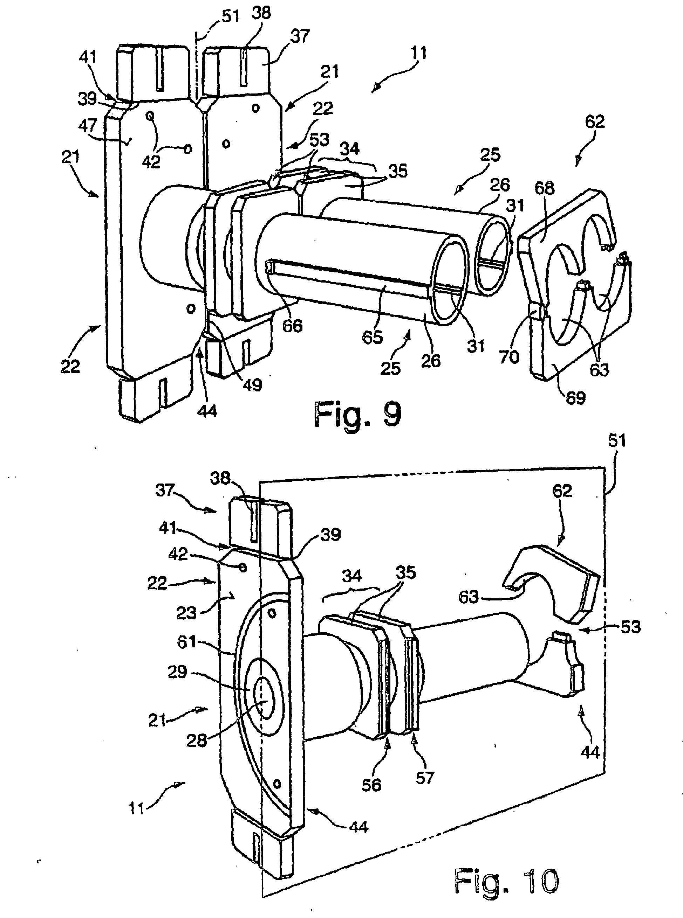

In Figur 9 ist eine weitere alternative Ausführungsform zu Figur 8 dargestellt. Diese alternative Ausführungsform der Anschlussvorrichtung 11 weicht lediglich im Hinblick auf das Verbindungsstück 62 von der Figur 8 ab. Im Übrigen wird hierauf Bezug genommen. Das Verbindungsstück 62 ist zweiteilig ausgebildet und weist ein oberes und unteres Verbindungselement 68, 69 auf, welche durch ein Gelenk 70 miteinander verbunden sind. Dadurch kann ein Aufbringen des Verbindungsstückes 62 nach dem Fixieren der Verpressschläuche 14 zu den Klemmeinrichtungen 25 ermöglicht werden. Bevorzugt weisen die Verbindungsstücke 62 gemäß den Figuren 8 und 9 zwischen den beiden benachbarten Bohrungen 63 ebenfalls eine Sollbruchverbindung 44 oder eine lösbare Rastverbindung 51 auf, so dass nach dem Vereinzeln der Anschlussstücke 21 das Anbringen einer Sperre 43 ermöglicht ist, wie dies beispielsweise in Figur 10 dargestellt ist.

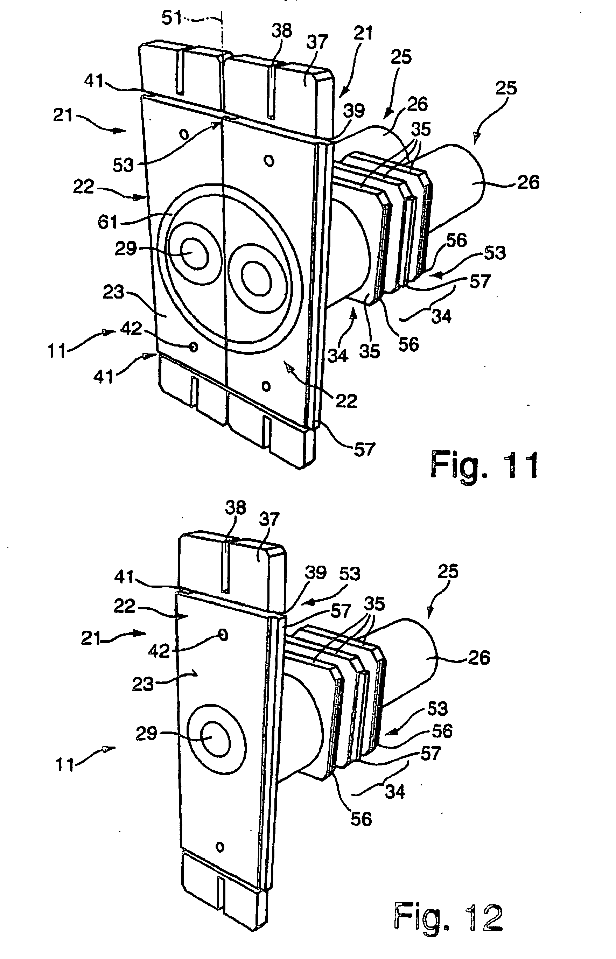

In Figur 11 ist eine perspektivische Ansicht einer alternativen Ausführungsform der Anschlussvorrichtung 11 gemäß Figur 3 dargestellt. Diese Ausführungsform welcht lediglich dahingehend von der in Figur 3 ab, dass anstelle der Sollbruchverbindung 44 zwischen den benachbarten Anschlussflanschen 22 der Anschlussstücke 21 eine lösbare Rastverbindung 53 vorgesehen ist. Im Übrigen wird auf die Beschreibung dieser Anschlussvorrichtung 11 Bezug genommen.

Bei der in Figur 11 dargestellten Ausführungsform der Anschlussvorrichtung 11 ist die lösbare Rastverbindung durch zwei Rastelemente 56, 57 entlang den aneinander grenzenden Seitenflächen der Anschlussflansche 22 als Nut- und Federverbindung ausgebildet. Dadurch wird eine einfache Steck- und/oder Klemmverbindung geschaffen, durch welche die einzelnen Anschlussstücke 21 zu einer Anschlussvorrichtung 11 zusammensteckbar sind. Ebenso kann eine wahlweise und einfache Vereinzelung der Anschlussstücke 21 erfolgen. Dadurch wird ermöglicht, dass beim Vorhandensein von mehreren einzelnen Anschlussstücken 21 diese zusammengesetzt werden können, um beispielsweise eine Anschlussvorrichtung 11 mit zwei oder mehreren Anschlussstücken 21 zu schaffen.

Die Ausgestaltung der Rastelemente 56, 57 als Nut- und Federverbindung können beispielsweise einen annähernd rechteckförmigen oder quadratischen beziehungsweise topfförmigen Querschnitt aufweisen. Alternativ kann auch ein schwalbenschwanzförmiger, pilzkopfähnlicher oder kederförmiger Querschnitt vorgesehen sein. Sofern die Hinterschneidungen der Rastelemente 56; 57 ein gewisses Maß überschreiten, ist ein verrastendes Stecken nicht mehr ermöglicht. In einem solchen Fall können die beiden Anschlussstücke 21 durch eine gegenläufige Verschieberichtung zueinander montiert werden.

Solche lösbaren Rastverbindungen 53, die beispielsweise zwischen den insbesondere langen Stirnseiten der Anschlussflansche 22 ausgebildet sind, können auch an dem Außenumfang der Klemmeinrichtung 25, insbesondere an den Ringabschnitten 35, vorgesehen sein. Dabei sind die Nut- und Federelemente immer abwechselnd zueinander vorgesehen. Alternativ können diese auch an einer Klemmeinrichtung 25 einheitlich ausgebildet sein.

In Figur 12 ist ein Anschlussstück 21 dargestellt, welches als solches eine Anschlussvorrichtung 11 bilden kann. Ebenso kann dieses Anschlussstück 21 mit einem oder mehreren weiteren Anschlussstücken 21 zu einer Anschlussvorrichtung 11 zusammengesetzt werden.

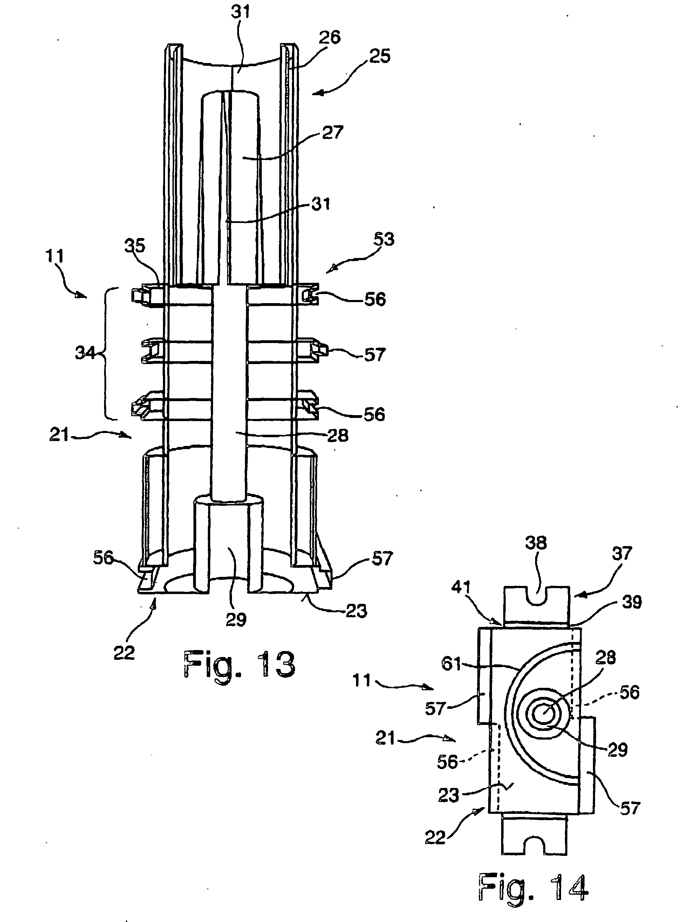

In Figur 13 ist ein schematischer Vollschnitt des Anschlussstückes 21 in Figur 12 dargestellt. Dieser schematische Vollschnitt zeigt den prinzipiellen Aufbau des Anschlussstückes 21, wobei diese Darstellung auch für das Anschlussstück 21 gemäß Figur 7 und Figur 10 gilt, mit Ausnahme der Rastelemente 56, 57 zur Bildung der lösbaren Rastverbindung 53 an dem Anschlussflansch 22. In den Figuren 7 und 10 ist anstelle der lösbaren Rastverbindung 53 am Anschlussflansch 22 eine Sollbruchverbindung 44 vorgesehen, die beispielsweise als Filmscharnier 49 ausgebildet ist.

In Figur 14 ist eine alternative Ausgestaltung einer lösbaren Rastverbindung 53 zu den Figuren 11 bis 13 dargestellt. Bei dieser Ausführungsform ist an einer Stirnfläche des Anschlussflansches 22 sowohl ein Nutals auch Federelement als Rastelemente 56, 57 vorgesehen. An einer gegenüberliegenden Stirnfläche des selben Anschlussflansches 22 ist eine punktsymmetrische Anordnung der Rastelemente 56, 57 vorgesehen. Diese Ausführungsform ermöglicht unabhängig der Ausrichtung von zwei zu verbindenden Anschlussstücken 21 immer ein sicheres Ineinanderstecken der benachbarten Anschlussstücke 21.

In Figur 15 ist die alternative Ausführungsform gemäß Figur 11 mit einem Distanzstück 60 dargestellt, welches beispielsweise mittels einer Schraub- oder Steckverbindung zur Anlagefläche 23 befestigt ist. Dieses Distanzstück 60 greift an dem Positionierelement 61 an, welches beispielsweise in den Figuren 6 und 7 als auch in Figur 14 dargestellt ist. Die Befestigungselemente zur Fixierung des Distanzstückes 60 greifen in die Durchgangsbohrung 29 und/oder in den Durchgangskanal 28 ein.

Es versteht sich, dass verschiedene lösbare Rastverbindungen 53 auch miteinander kombiniert werden können, das heißt, dass die lösbare Rastverbindung 53 an den Anschlussflanschen 22 von denjenigen Rastverbindungen 53 an der Klemmeinrichtung 25 abweichen können. Des Weiteren können separate lösbare Rastverbindungen 53 an der Klemmhülse vorgesehen sein, die auch außerhalb der Trennebene 51 liegen. Ein Beispiel hierfür stellt das Verbindungsstück 62 dar. Weitere alternative Ausführungen sind ebenfalls denkbar.

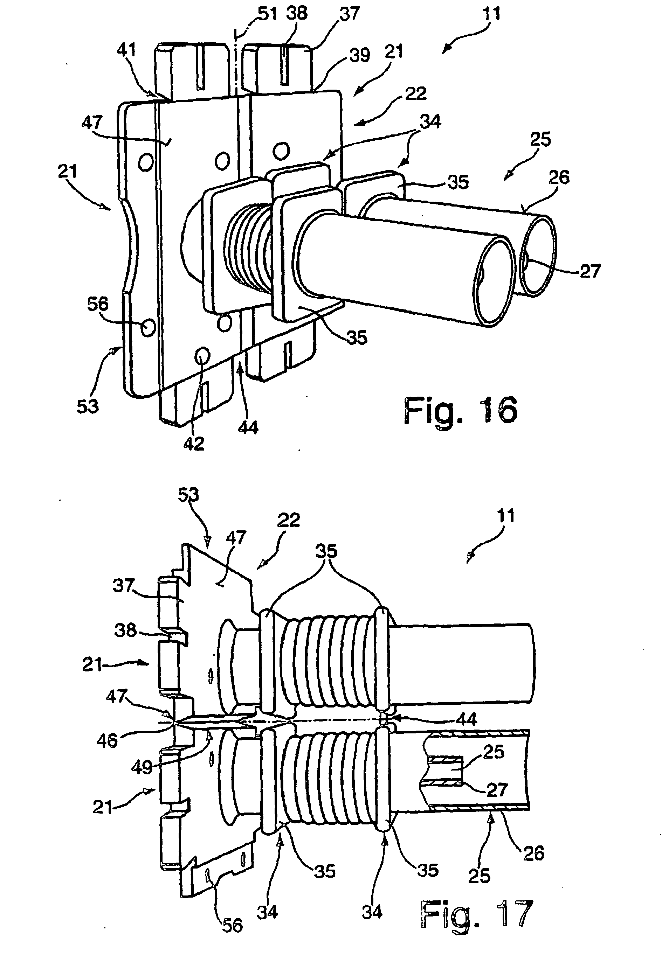

In den Figuren 16 bis 19 ist eine weitere alternative Ausführungsform einer Anschlussvorrichtung 11 dargestellt. Diese Ausführungsform der Anschlussvorrichtung 11 weicht gegenüber der Ausführungsform der Anschlussvorrichtung 11 gemäß den Figuren 3 bis 6 in den nachfolgend näher beschriebenen Merkmalen ab. Im Übrigen wird vollumfänglich auf die Anschlussvorrichtung 11 gemäß den Figuren 3 bis 6 Bezug genommen. Ebenso wird auf die weiteren Anschlussvorrichtungen 11 gemäß den Figuren 7 bis 15 Bezug genommen sowie auf solche Ausführungsformen und Abwandlungen, die auch bei der Anschlussvorrichtung 11 gemäß den Figuren 16 bis 19 möglich sind. Anstelle der lösbaren Rastverbindung 53 zwischen den an den Klemmeinrichtungen 25 vorgesehenen Sperren 34 gemäß der Anschlussvorrichtung 11 in den Figuren 3 bis 6 ist bei der Ausführungsform gemäß den Figuren 16 bis 19 eine Sollbruchverbindung 44 vorgesehen. Diese Sollbruchverbindung 44 ist beispielsweise als dünner Steg ausgebildet. Aufgrund der bevorzugten Ausgestaltung der Anschlussvorrichtung 11 aus Kunststoff ist dieser Steg zwischen den beiden Ringabschnitten 35 der Sperren 34 unmittelbar angespritzt. Diese Sollbruchverbindung 44 ist beispielsweise dadurch gebildet, dass der Steg einen dünnen oder einen verjüngten Querschnitt aufweist, welcher beim voneinander Wegbewegen der beiden Klemmeinrichtungen 25 bricht. Alternativ können Kerben oder separate Querschnittsverjüngungen vorgesehen sein, die einfach zu trennen sind. Des Weiteren kann die Sollbruchverbindung 44 auch solche Ausführungsformen umfassen, wie diese die Verbindung von zwei zueinander benachbarten Anschlussflanschen 22 aufweisen. Des Weiteren können mehrere Sollbruchverbindungen 44, insbesondere Stege, zwischen den Klemmeinrichtungen 35, vorzugsweise den Sperren 34, vorgesehen sein.

Des Weiteren kann zwischen den beiden benachbarten Klemmeinrichtungen 25 sowohl zumindest eine lösbare Rastverbindung 53 als auch eine Sollbruchverbindung 44 vorgesehen sein. Durch die Kombination kann ermöglicht werden, dass zunächst eine erhöhte Sicherheit gegen unbeabsichtigtes Lösen über die Sollbruchverbindung 44 gegeben ist und nach dem einmaligen Lösen und Brechen der Sollbruchverbindung aufgrund der zumindest einen lösbaren Rastverbindung 53 zwischen den beiden Klemmeinrichtungen 25 eine zusammensteckbare Anordnung geschaffen werden kann. Die zumindest eine Sollbruchverbindung 44 und zumindest eine lösbare Rastverbindung 53 sind bevorzugt an den Ringabschnitte 35 der Sperren 34 vorgesehen. Alternativ können diese ebenso an weiteren verschiedenen Bereichen der Klemmeinrichtungen 25 vorgesehen sein und die beiden Klemmeinrichtungen 25 miteinander verbinden.

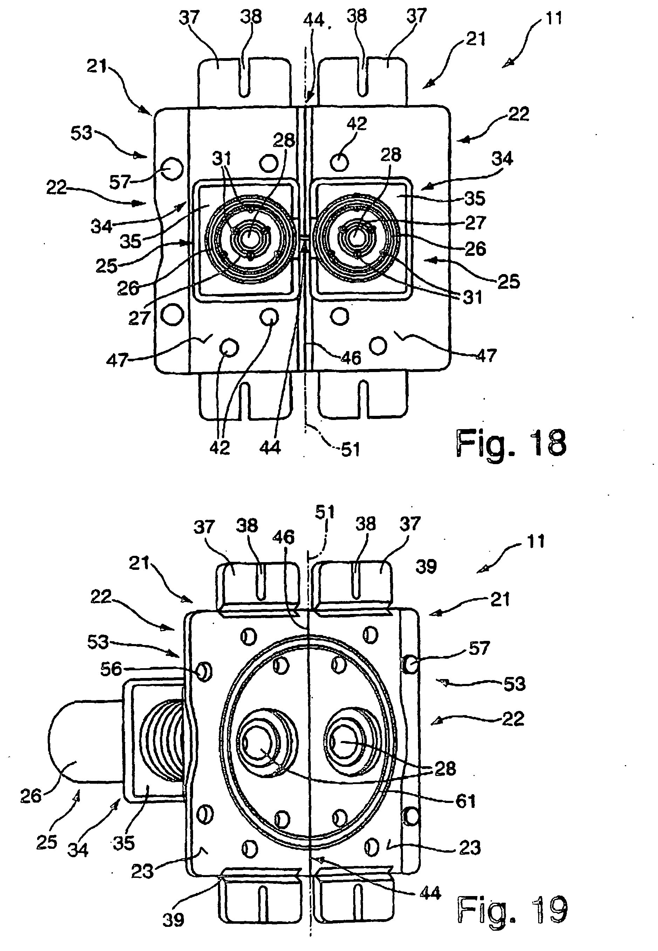

Die in den Figuren 16 bis 19 dargestellte Anschlussvorrichtung 11 weicht von der Ausführungsform in den Figuren 3 bis 6 noch dahingehend ab, dass an den Stirnseiten der Anschlussflansche 22 Rastelemente 56, 57 vorgesehen sind, die eine lösbare Rastverbindung 53 bilden, um die Anschlussflansche 22 von benachbarten Anschlussstücken 21 miteinander zu verbinden. Bei dieser Ausführungsform ist das Rastelement 56 beispielsweise als Durchgangsbohrung und das Rastelement 57 beispielsweise als Zapfen ausgebildet, wie dies aus Figur 19 hervorgeht. Ergänzend sind die Durchgangsbohrung und der Zapfen als Rastelemente 56, 57 auf einem in der Dicke verjüngten Abschnitt am Anschlussflansch 22 vorgesehen, so dass beim Verbinden der beiden Anschlussflansche 22 die Anlagefläche 23 aufrechterhalten bleibt und eine bündige Anordnung der beiden Anlageflächen 23 in einer Ebene ermöglicht ist. Alternativ zur Durchgangsbohrung kann vorgesehen sein, dass eine napfförmige Vertiefung ausgebildet ist. Die Durchgangsbohrungen und die Zapfen können abweichend von einem kreisrunden Querschnitt auch eine rechteckförmige Kontur oder quadratische Kontur oder weitere geometrische Ausgestaltungen aufweisen.

Bei der Ausführungsform der Anschlussvorrichtung 11 gemäß den Figuren 16 bis 19 sind beispielsweise nur zwei Sperren 34 vorgesehen. Zwischen den beiden Sperren 34 ist ein gewellter oder geriffelter Bereich ausgebildet, der sich ausgehend von der Sperre 34, die zum Anschlussflansch 22 benachbart ist, zur weiteren Sperre 34 aufweitet. Dadurch wird ermöglicht, dass der Anschlussbereich der Klemmeinrichtung 25 zum Anschlussflansch 22 hin im Durchmesser gering gehalten werden kann und gleichzeitig die Klemmhülse 26 hinreichend groß zur Aufnahme von Injektionsschläuchen ausgebildet ist. Der gerillte oder geriffelte Auβenumfang zwischen den beiden Sperren 34 an der Klemmeinrichtung 25 dient des Weiteren dazu, dass eine Sperrwirkung erzielt wird.

Solche Anschlussvorrichtungen 11 werden aus Kunststoff, insbesondere einem schlagzähen Kunststoff, hergestellt. Die Anschlussstücke 21 gemäß den Ausführungsformen der Figuren 11 bis 15 werden jeweils separat als Spritzgussteil hergestellt und können anschließend als sogenannte Einfach-, Zweifach- oder Mehrfachanschlussvorrichtung zusammengesteckt werden. Die Anschlussvorrichtungen 11 gemäß den Ausführungsformen 1 bis 10 werden beispielsweise als Zweifach- oder Mehrfachanschlussvorrichtung 11 mit zwei oder mehreren Anschlussstücken 21 in einem Spritzgusswerkzeug hergestellt. In diesem Spritzvorgang kann gleichzeitig die Sollbruchverbindung 44 ausgebildet werden. Diese Sollbruchverbindung 44 kann nicht nur zwischen den Anschlussflanschen 22, sondern auch zwischen den Klemmvorrichtungen 25 vorgesehen sein. Des Weiteren kann zwischen den Anschlussflanschen 22 eine lösbare Rastverbindung 53 vorgesehen sein und zwischen den Klemmeinrichtungen Sollbruchverbindungen 44 angeordnet werden.

## Patentansprüche

1. Anschlussvorrichtung zur Aufnahme von zumindest einem Verpressschlauch (14) mit zumindest zwei Anschlussstücken (21), wobei jedes Anschlussstück (21) einen Anschlussflansch (22) und zumindest eine daran angeordnete Klemmeinrichtung (25) umfasst, durch welche zumindest ein Ende des Verpressschlauches (14) fixierbar ist, mit einer in einer Anlagefläche (23) des Anschlussflansches (22) angeordneten Durchgangsbohrung (29), die zur Klemmeinrichtung (25) führt, so dass ein Injektionsmedium über die Durchgangsbohrung (29) dem Verpressschlauch (14) zuführbar ist, **dadurch gekennzeichnet,**
- **dass** zwischen zumindest zwei Anschlussstücken (21) eine Sollbruchverbindung (44) vorgesehen ist oder
- **dass** die Anschlussvorrichtung eine lösbare Rastverbindung (53) umfasst, über die das erste und das zweite Anschlussstück (21) lösbar mit einander verbunden sind.

2. Anschlussvorrichtung nach Anspruch 1, **dadurch gekennzeichnet, dass** zwischen zwei benachbarten Anschlussstücken (21) eine Trennebene (51) gebildet ist und dass zumindest eine Sollbruchverbindung (44) oder dass zumindest eine lösbare Rastverbindung (53) oder dass zumindest eine Sollbruchverbindung (44) und zumindest eine lösbare Rastverbindung (53) in der Trennebene (51) zwischen den benachbarten Anschlussstücken (21) vorgesehen ist.

3. Anschlussvorrichtung nach Anspruch 1 oder 2, **dadurch gekennzeichnet, dass** die Sollbruchverbindung (44) als Knickstelle ausgebildet ist, welche nach einem oder mehrmaligen Knicken bricht, oder dass die Sollbruchverbindung (44) als Filmscharnier ausgebildet ist, oder dass die Sollbruchverbindung (44) als Steg oder als Stegbereich mit einer Perforation ausgebildet ist oder mehrere im Abstand zueinander angeordnete Stegabschnitte aufweist, oder dass die Sollbruchverbindung (44) als Abreißlasche ausgebildet ist.

4. Anschlussvorrichtung nach Anspruch 1 oder 2, **dadurch gekennzeichnet, dass** die lösbare Rastverbindung (53) durch zueinander komplementär ausgebildete Rastelemente (56, 57) ausgebildet sind, die zumindest abschnittsweise ineinander greifen und dass vorzugsweise die beiden Rastelemente (56, 57) zur Bildung der lösbaren Rastverbindung (53) als Klemm- und/oder Steckverbindung ausgebildet sind, oder die Rastelemente (56, 57) als Nut- und Federelemente oder als Durchgangsbohrung und Zapfen ausgebildet sind, die klemmend ineinander greifen, oder zumindest eines der beiden Rastelemente (56, 57) zur Bildung der lösbaren Rastverbindung (53) eine Hinterschneidung aufweist.

5. Anschlussvorrichtung nach Anspruch 4, **dadurch gekennzeichnet, dass** an einer Stirnfläche des Anschlussflansches (22), welche an einer Stirnfläche des benachbarten, zu verbindenden Anschlussstückes (21) angreift, die vorzugsweise als Nut- und Federelement ausgebildeten Rastelemente (56, 57) sich über die gesamte Stirnfläche am Anschlussflansch (22) erstrecken, oder dass an einer Stirnfläche des Anschlussflansches (22), weiche an einer Stirnfläche des benachbarten, zu verbindenden Anschlussstückes (21) angreift, sowohl ein Nut- als auch Federelement als Rastelemente (56, 57) vorgesehen sind, die sich vorzugsweise über die Hälfte der Länge der Stirnfläche erstrecken und auf der gegenüberliegenden Stirnfläche desselben Anschlussflansches (22) eine punktsymmetrische Anordnung des Nut- und Federelementes zum Flächenmittelpunkt der Anlagefläche (23) des Anschlussflansches (22) vorgesehen ist.

6. Anschlussvorrichtung nach einem der vorhergehenden Ansprüche, **dadurch gekennzeichnet, dass** zwei benachbarte Anschlussflansche (22) der Anschlussstücke (21) mit einer Sollbruchverbindung (44) oder einer lösbaren Rastverbindung (53) verbunden sind.

7. Anschlussvorrichtung nach Anspruch 6, **dadurch gekennzeichnet, dass** die zwischen zwei benachbarten Anschlussflanschen (22) vorgesehene Sollbruchverbindung (44) in der Anlagefläche (23) der benachbarten Anschlussflansche (22) liegt, oder dass die zwischen zwei benachbarten Anschlussflanschen (22) vorgesehene lösbare Rastverbindung (53) die Anschlussflächen (23) bündig zueinander anordnet.

8. Anschlussvorrichtung nach Anspruch 1 oder 2, **dadurch gekennzeichnet, dass** zwischen zwei benachbarten Klemmeinrichtungen (25) zumindest eine lösbare Rastverbindung (53) oder zumindest eine Sollbruchverbindung (44) oder dass zumindest eine lösbare Rastverbindung (53) und zumindest eine Sollbruchverbindung (44) vorgesehen ist und dass vorzugsweise die zwischen den benachbarten Klemmeinrichtungen (25) angeordnete lösbare Rastverbindung (53) mit Abstand zur Sollbruchverbindung (44) vorgesehen ist, welche zwei benachbarte Anschlussflansche (22) miteinander verbindet.

9. Anschlussvorrichtung nach Anspruch 1, **dadurch gekennzeichnet, dass** an jeder Klemmeinrichtung (25) zumindest eine Sperre (34) für ein Injektionsmedium vorgesehen ist, welche am Außenumfang einer Klemmhülse (26) der Klemmeinrichtung (25) angeordnet ist und vorzugsweise wenigstens ein Rastelement (56, 57) der lösbaren Rastverbindung (53) aufweist und insbesondere die Sperre (34) für Injektionsmedium als Ringabschnitt (35), vorzugsweise mit einer quadratischen oder rechteckförmigen Außenkontur, ausgebildet ist, welcher die Klemmhülse (26) der Klemmeinrichtung (25) umgibt und an zumindest einem Ringabschnitt (35) wenigstens ein Rastelemente (56, 57) der lösbaren Rastverbindung (53) vorgesehen ist, wobei vorzugsweise wenigstens ein Rastelement (56, 57) der lösbaren Rastverbindung in der Trennebene angeordnet ist.

10. Anschlussvorrichtung nach Anspruch 1, **dadurch gekennzeichnet, dass** zumindest zwei benachbarte Klemmeinrichtungen (25) durch ein Verbindungsstück (62) zueinander positionierbar sind, welches an zumindest zwei benachbarten Klemmeinrichtungen (25) angreift und zusammen eine lösbare Rastverbindung (53) bilden und vorzugsweise das Verbindungsstück (62) zumindest zwei Bohrungen (63) aufweist, in welchen jeweils eine Klemmeinrichtung (25) positionierbar ist, oder das Verbindungsstück (62) entlang seiner Längsachse eine die Bohrungen (63) durchlaufende Trennebene aufweist und in zwei Verbindungselemente (68, 69) getrennt ist, die vorzugsweise gelenkig miteinander verbunden sind.

11. Anschlussstück nach Anspruch 1, **dadurch gekennzeichnet, dass** die Klemmeinrichtung (25) eine am Anschlussflansch (22) angeordnete Klemmhülse (26) aufweist, welche eine ebenfalls am Anlageflansch (22) angeordnete Tülle (27) umgibt, wobei die Klemmhülse (26) ausgehend von einer Flanschfläche (47) am Anschlussflansch (22) sich über die Tülle (27) hinaus erstreckt und vorzugsweise die Tülle (27) einen Durchgangskanal (28) aufweist, welcher die Durchgangsbohrung (29) der Anschlussfläche (23) mit einem Inneren des auf der Klemmeinrichtung (25) aufgesteckten Verpressschlauches (14) verbindet.

12. Anschlussvorrichtung nach Anspruch 11, **dadurch gekennzeichnet, dass** am Außenumfang der Tülle (27) oder am Innenumfang der Klemmhülse (26) oder am Außenumfang und Innenumfang der klemmhülse (26) und Tülle (27) hervorstehende Rippen (31) vorgesehen sind und vorzugsweise die Rippen (31) in Aufsteckrichtung des Verpressschlauches (14) in der Klemmeinrichtung (25) konisch ansteigend ausgebildet sind, oder die Rippen (31) am Innenumfang der Klemmhülse (26) und die Rippen (31) am Außenumfang der Tülle (27) versetzt, vorzugsweise auf Lücke versetzt zueinander, angeordnet sind.

13. Anschlussvonichtung nach Anspruch 1, **dadurch gekennzeichnet, dass** zwei benachbarte Anschlussflansche (22) eine Anlagefläche (23) bilden, welche ein Positionierelement (61) zur Aufnahme eines Distanzstückes (60) umfasst und vorzugsweise das Positionierelement (61) wenigstens zwei Durchgangsbohrungen (29) von zwei benachbarten Anschlussstücken (21) umgibt.

14. Anschlussvorrichtung nach Anspruch 1, **dadurch gekennzeichnet, dass** an jedem Anschlussflansch (22) des Anschlussstücks (21) zumindest eine Nagellasche (37) vorgesehen ist und vorzugsweise die Nagellasche (37) mit einer U-förmigen randoffenen Ausnehmung (38) ausgebildet ist und vorzugsweise eine gelenkige Verbindung, eine Sollbruchverbindung (44) oder lösbare Rastverbindung (53) aufweist.

15. Anschlussvorrichtung nach Anspruch 1, **dadurch gekennzeichnet, dass** an der äußeren Stirnseite der Anschlussflansche (22) Rastelemente (56, 57) vorgesehen sind, die mit Anschlussflanschen (22) von benachbarten Anschlussstücken (21) eine lösbare Rastverbindung bilden.

## Claims

1. A connecting device for holding at least one injection hose (14) having at least two connecting pieces (21), each connecting piece (21) comprising a connecting flange (22) and at least one clamping device (25) disposed thereon by means of which at least one end of the injection hose (14) is fixable, said connecting device having a through hole (29) arranged in a contact surface (23) of the connecting flange (22) and leading to the clamping device (25), such that the injection medium is suppliable to the injection hose (14) via said through hole (29), **characterised in that**
- a predetermined breaking joint, (44) is provided between at least two connecting pieces (21), or
- the connecting device comprises a separable engaging joint (53) by means of which the first and second connecting pieces (21) are joined together in a separable manner.

2. The connecting device as claimed in claim 1, **characterised in that** between two adjacent connecting pieces (21) a parting plane (51) is formed and that at least one predetermined breaking joint (44) or that at least one separable engaging joint (53) or that at least one predetermined breaking joint (44) and at least one separable engaging joint (53) are provided in the parting plane (51) between said adjacent connecting pieces (21).

3. The connecting device as claimed in claim 1 or 2, **characterised in that** the predetermined breaking joint (44) is realised as a fold that will break after having been folded once or several times, or that the predetermined breaking joint (44) is realised as a living hinge, or that the predetermined breaking joint (44) is realised as a land or a land portion having a perforation or is provided with a plurality of land portions disposed at a given distance from one another, or that the predetermined breaking joint (44) is realised as a tear-off tab.

4. The connecting device as claimed in claim 1 or 2, **characterised in that** the separable engaging joint (53) is realised by mutually complementary engaging elements (56, 57) engaging with each other at least sectionwise, and **in that** preferably the two engaging elements (56, 57) forming the separable engaging joint (53) are realised as a clamping connector and/or a plug-and-socket connector, or **in that** the engaging elements (56, 57) are realised as tongue-and-groove elements or as a through hole and pin engaging with each other in a clamping manner, or **in that** at least one of the two engaging elements (56, 57) forming the separable engaging joint (53) is provided with an undercut.

5. The connecting device as claimed in claim 4, **characterised in that** on an end face of the connecting flange (22) which is applied to an end face of the adjacent connecting piece (21) that is to be joined, the engaging elements (56, 57), preferably realised as tongue elements and groove elements, extend over the entire end face of the connecting flange (22), or **in that** on an end face of the connecting flange (22) which is applied to an end face of the adjacent connecting piece (21) that is to be joined, specific tongue-and-groove elements figuring as engaging elements (56, 57) are provided which preferably extend over half a length of said end face, and **in that** on the opposite end face of the same connecting flange (22) an arrangement of the tongue-and-groove element is provided that is point-symmetrically disposed with respect to the centre of area of the contact surface (23) of the connecting flange (22).

6. The connecting device as claimed in any one of the preceding claims, **characterised in that** two adjacent connecting flanges (22) of the connecting pieces (21) are joined together by means of a predetermined breaking join (44) or a separable engaging joint (53).

7. The connecting device as claimed in claim 6, **characterised in that** the predetermined breaking joint (44) provided between two adjacent connecting flanges (22) is located respectively in the contact surface (23) of the adjacent connecting flanges (22), or **in that** the separable engaging joint (53) provided between two adjacent connecting flanges (22) disposes the connecting surfaces (23) flush with respect to each other.

8. The connecting device as claimed in claim 1 or 2, **characterised in that** between two adjacent clamping devices (25) at least one separable engaging joint (53) or at least one predetermined breaking joint (44), or at least one separable engaging joint (53) and at least one predetermined breaking joint are provided, and **in that** preferably the separable engaging joint (53) arranged between said adjacent clamping devices (25) is provided at a given distance from the predetermined breaking joint (44) that connects two adjacent connecting flanges (22) with each other.

9. The connecting device as claimed in claim 1, **characterised in that** on each clamping device (25) at least one barrier (34) for an injection medium is provided which is arranged at the outer periphery of a clamping sleeve (26) of the clamping device (25) and is preferably provided with at least one engaging element (56, 57) of the separable engaging joint (53), and **in that** in particular the barrier (34) for the injection medium is realised as an annular portion (35), preferably having a square or rectangular outer contour, which surrounds the clamping sleeve (26) of the clamping device (25), and **in that** on at least one annular portion (35) at least one engaging element (56, 57) of the separable engaging joint (63) is provided, with at least one engaging element (56, 57) of the separable engaging joint being preferably arranged in the parting plane.

10. The connecting device as claimed in claim 1, **characterised in that** at least two adjacent clamping devices (25) are positionable with respect to one another by means of a joining piece (62) that is applied to at least two adjacent clamping devices (25) and cooperate to form a separable engaging joint (53), and **in that** the joining piece (62) is preferably provided with two holes (63) in each of which a clamping device (25) is positionable, or **in that** the joining piece (62) has a parting plane extending along its longitudinal axis and traversing the holes (63) and is thus separated into two joining elements (68, 69) which are hingedly connected with each other.

11. The connecting piece as claimed in claim 1, **characterised in that** the clamping device (25) has a clamping sleeve (26) disposed on the connecting flange (22) and surrounding a spout (27) equally arranged on the connecting flange (22), with the clamping sleeve (26) extending from a flange surface (47) on the connecting flange (22) beyond the spout (27), and **in that** the spout (27) preferably has a passage channel (28) which connects the through hole (29) of the contact surface (23) with an interior of the injection hose (14) placed on the clamping device (25).

12. The connecting device as claimed in claim 11, **characterised in that** on the outer circumference of the spout (27) or on the inner circumference of the clamping sleeve (26) or on both the outer circumference of the spout (27) and the inner circumference of the clamping sleeve (26) protruding ribs (31) are provided, and **in that** preferably the ribs (31) within the clamping device (25) conically increase in height in the direction of plugging of the injection hose (14), or **in that** the ribs (31) on the inner circumference of the clamping sleeve (26) and the ribs (31) on the outer circumference of the spout (27) are disposed with an offset, preferably in a staggered manner, with respect to one another.

13. The connecting device as claimed in claim 1, **characterised in that** two adjacent connecting flanges (22) form a contact surface (23) which comprises a positioning element (61) for receiving a spacer (60), and **in that** preferably the positioning element (61) surrounds at least two through holes (29) of two adjacent connecting pieces (21).

14. The connecting device as claimed in claim 1, **characterised in that** on each connecting flange (22) of the connecting piece (21) at least one nailing strap (37) is provided, **in that** said nailing strap (37) is preferably realised with a U-shaped cut-out (38) having an open edge, and **in that** said connecting flange preferably has an articulated joint, a predetermined breaking joint (44) or a separable engaging joint (53).

15. The connecting device as claimed in claim 1, **characterised in that** the outer end faces of the connecting flanges (22) are provided with engaging elements (56, 57) that cooperate with the connecting flanges (22) of adjacent connecting pieces (21) to form a separable engaging joint.

## Revendications

1. Dispositif de raccordement destiné à recevoir au moins un tuyau souple d'injection (14) avec au moins deux pièces de raccordement (21), chaque pièce de raccordement (21) comprenant une bride de raccordement (22) et au moins un dispositif de serrage (25) disposé sur celle-ci, lequel permet de fixer au moins une extrémité du tuyau souple d'injection (14); avec un trou de passage (29) qui est disposé dans une surface de contact (23) de la bride de raccordement (22) et mène jusqu'au dispositif de serrage (25) de sorte qu'un matériau d'injection peut être amené au tuyau souple d'injection (14) via le trou de passage (29), **caractérisé en ce que**
- un assemblage destiné à la rupture (44) est prévu entre au moins deux pièces de raccordement (21) ou
- le dispositif de raccordement comprend un assemblage à enclenchement (53) séparable grâce auquel la première et la deuxième pièce de raccordement (21) sont reliées l'une à l'autre de manière séparable.

2. Dispositif de raccordement selon la revendication 1, **caractérisé en ce qu'**un plan de séparation (51) est formé entre deux pièces de raccordement (21) voisines, et **en ce qu'**au moins un assemblage destiné à la rupture (44) ou qu'au moins un assemblage à enclenchement (53) séparable ou qu'au moins un assemblage destiné à la rupture (44) et au moins un assemblage à enclenchement (53) séparable est prévu ou sont prévus dans le plan de séparation (51) entre les pièces de raccordement (21) voisines.

3. Dispositif de raccordement selon la revendication 1 ou 2, **caractérisé en ce que** l'assemblage destiné à la rupture (44) est réalisé sous forme de pli qui casse après un seul pliage ou plusieurs pliages, ou **en ce que** l'assemblage destiné à la rupture (44) est réalisé sous forme de charnière intégrale, ou **en ce que** l'assemblage destiné à la rupture (44) est réalisé sous forme de bande de rattachement ou de zone de bande de rattachement pourvue d'une perforation, ou présente plusieurs segments de bande de rattachement disposés à une distance donnée les uns des autres, ou **en ce que** l'assemblage destiné à la rupture (44) est réalisé sous forme de languette de rupture.

4. Dispositif de raccordement selon la revendication 1 ou 2, **caractérisé en ce que** l'assemblage à enclenchement (53) séparable est formé par des éléments d'enclenchement (56, 57) complémentaires entre eux, lesquels s'engagent au moins partiellement les uns dans les autres, et **en ce que** de préférence les deux éléments d'enclenchement (56, 57) formant l'assemblage à enclenchement (53) séparable sont réalisés sous forme d'assemblage par serrage et/ou d'assemblage à emboîtement, ou **en ce que** les éléments d'enclenchement (56, 57) sont réalisés sous forme d'éléments à rainure et languette ou sous forme de trou de passage et de tenon qui s'engagent l'un dans l'autre avec serrage, ou **en ce qu'**au moins l'un des deux éléments d'enclenchement (56, 57) présente une contre-dépouille en vue de former l'assemblage à enclenchement (53) séparable.

5. Dispositif de raccordement selon la revendication 4, **caractérisé en ce que** sur une face frontale de la bride de raccordement (22) qui appuie contre une face frontale de la pièce de raccordement (21) voisine qui doit être raccordée, les éléments d'enclenchement (56, 57), réalisés de préférence sous forme d'élément à rainure et d'élément à languette, s'étendent sur toute la face frontale de ladite bride de raccordement (22), ou **en ce que** sur une face frontale de la bride de raccordement (22) qui appuie contre une face frontale de la pièce de raccordement (21) voisine qui doit être raccordée, des éléments à la fois à rainure et languette sont prévus comme éléments d'enclenchement (56, 57) qui s'étendent de préférence sur la moitié de la longueur de la face frontale, et **en ce qu'**il est prévu sur la surface frontale opposée de la même bride de raccordement (22), une disposition à symétrie ponctuelle de l'élément à rainure et languette par rapport au centre de la surface de contact (23) de la bride de raccordement (22).

6. Dispositif de raccordement selon l'une quelconque des revendications précédentes, **caractérisé en ce que** deux brides de raccordement (22) voisines des pièces de raccordement (21) sont reliées grâce à un assemblage destiné à la rupture (44) ou à un assemblage à enclenchement (53) séparable.

7. Dispositif de raccordement selon la revendication 6, **caractérisé en ce que** l'assemblage destiné à la rupture (44) prévu entre deux brides de raccordement (22) voisines est situé dans la surface de raccordement (23) des brides de raccordement (22) voisines, ou **en ce que** l'assemblage à enclenchement (53) séparable prévu entre deux brides de raccordement (22) voisines dispose les surfaces de contact (23) l'une par rapport à l'autre de manière à former une surface plane.

8. Dispositif de raccordement selon la revendication 1 ou 2, **caractérisé en ce qu'**il est prévu entre deux dispositifs de serrage (25) voisins au moins un assemblage à enclenchement (53) séparable ou au moins un assemblage destiné à la rupture (44), ou au moins un assemblage à enclenchement (53) séparable et au moins un assemblage destiné à la rupture (44), et **en ce que** de préférence l'assemblage à enclenchement (53) séparable qui est disposé entre les dispositifs de serrage (25) voisins est prévu avec une distance donnée par rapport à l'assemblage destiné à la rupture (44) qui relie entre elles deux brides de raccordement (22) voisines.

9. Dispositif de raccordement selon la revendication 1, **caractérisé en ce que** sur chaque dispositif de serrage (25) est prévu au moins un barrage (34) pour un matériau d'injection lequel est disposé sur la circonférence extérieure d'une douille de serrage (26) dudit dispositif de serrage (25) et présente de préférence au moins un élément d'enclenchement (56, 57) de l'assemblage à enclenchement (53) séparable, et **en ce que** notamment le barrage (34) pour le matériau d'injection est réalisé sous forme de segment annulaire (35), de préférence avec un contour extérieur carré ou rectangulaire, qui entoure la douille de serrage (26) du dispositif de serrage (25), et **en ce que** sur au moins un segment annulaire (35) est prévu au moins un élément d'enclenchement (56, 57) de l'assemblage à enclenchement (63), au moins un élément d'enclenchement (56, 57) de l'assemblage à enclenchement séparable étant de préférence disposé dans le plan de séparation.

10. Dispositif de raccordement selon la revendication 1, **caractérisé en ce qu'**au moins deux dispositifs de serrage (25) voisins peuvent être positionnés l'un par rapport à l'autre par une pièce de jonction (62) qui appuie contre au moins deux dispositifs de serrage (25) voisins et forment ensemble un assemblage à enclenchement (53) séparable, et **en ce que** de préférence la pièce de jonction (62) présente au moins deux trous (63) dans lesquels peut être respectivement positionné un dispositif de serrage (25), ou **en ce que** la pièce de jonction (62) présente, le long de son axe longitudinal, un plan de séparation traversant les trous (63) et est séparée en deux éléments de jonction (68, 69) qui sont de préférence reliés entre eux de manière articulée.

11. Pièce de raccordement selon la revendication 1, **caractérisée en ce que** le dispositif de serrage (25) présente une douille de serrage (26) qui est disposée sur la bride de raccordement (22) et entoure un bec (27) disposé également sur la bride de raccordement (22), la douille de serrage (26) s'étendant, à partir d'une surface de bride (47) de la bride de raccordement (22), au-delà du bec (27), et le bec (27) présentant de préférence un canal de passage (28) qui relie le trou de passage (29) de la surface de contact (23) à un intérieur du tuyau souple d'injection (14) mis en place sur le dispositif de serrage (25).

12. Dispositif de raccordement selon la revendication 11, **caractérisé en ce que** des nervures (31) saillantes sont prévues sur la circonférence extérieure du bec (27) ou sur la circonférence intérieure de la douille de serrage (26), ou sur la circonférence extérieure du bec (27) et sur la circonférence intérieure de la douille de serrage (26), et **en ce que** de préférence les nervures (31) sont réalisées, dans le dispositif de serrage (25), de forme conique avec une hauteur de cône grandissante dans le sens de fixation du tuyau souple d'injection (14), ou **en ce que** les nervures (31) prévues sur la circonférence intérieure de la douille de serrage (26) et les nervures (31) prévues sur la circonférence extérieure du bec (27) sont disposées de manière décalée, les unes étant situées de préférence dans les espaces existant entre les autres.

13. Dispositif de raccordement selon la revendication 1, **caractérisé en ce que** deux brides de raccordement (22) voisines forment une surface de contact (23), laquelle comprend un élément de positionnement (61) destiné à recevoir une pièce d'écartement (60), et **en ce que** de préférence l'élément de positionnement (61) entoure au moins deux trous de passage (29) de deux pièces de raccordement (21) voisines.

14. Dispositif de raccordement selon la revendication 1, **caractérisé en ce qu'**au moins une bande de clouage (37) est prévue sur chaque bride de raccordement (22) de la pièce de raccordement (21), et **en ce que** de préférence la bande de clouage (37) est réalisée avec un évidement (38) en U ouvert sur un bord et présente de préférence un assemblage articulé, un assemblage destiné à la rupture (44) ou un assemblage à enclenchement (53) séparable.

15. Dispositif de raccordement selon la revendication 1, **caractérisé en ce que** sur la face frontale extérieure des brides de raccordement (22) sont prévus des éléments d'enclenchement (56, 57) qui forment avec des brides de raccordement (22) de pièces de raccordement (21) voisines un assemblage à enclenchement séparable.
